# EUROPÄISCHE PATENTANMELDUNG

(11) **EP 1 593 423 A2**
(43) Veröffentlichungstag der Anmeldung: **09.11.2005**
(21) Anmeldenummer: 05009861.5
(22) Anmeldetag: 04.05.2005
(51) Int. Cl.: B01D 53/86

(54) **Oxidationskatalytische Abtrennvorrichtung**

(30) Priorität: 05.05.2004 DE 102004022092
(71) Anmelder: Bauer Kompressoren Heinz Bauer, 81479 München (DE)
(72) Erfinder: Bauer, Heinz, 81479 München (DE)
(74) Vertreter: Hering, Hartmut

(57) **Zusammenfassung**

Es wird eine oxidationskatalytische Abtrennvorrichtung für Öl und flüchtige organische Bestandteile aus Druckgasen einer Verdichtungsanlage angegeben, welche ausgehend von der Einströmseite eines Behälters, welcher einen Oxidationskatalysator enthält, wenigstens zwei Kammern mit unterschiedlichen Durchmessern und/oder Längen umfaßt. Hierdurch kann man die Kammern jeweils auf die gewünschten Hauptfunktionen auch hinsichtlich den geometrischen Verhältnisse abstimmen, wobei insbesondere eine erste, durchmesserkleinere Kammer für die Aerosolabscheidung, und eine zweite durchmesser größere Kammer für die Restdampfkatalyse bestimmt ist. Selbst bei variabel betriebenen Verdichtungsanlagen können somit die Druckgase mit Hilfe dieser oxidationskatalytischen Abtrennvorrichtung zuverlässig derart gereinigt werden, dass man den geforderten und gewünschten Reinheitsgrad von qualitativ hochwertem Druckgas erhält.

## Beschreibung

Die Erfindung bezieht sich auf eine oxidationskatalytische Abtrennvorrichtung für Öl und flüchtige organische Bestandteile aus Druckgasen einer Verdichtungsanlage.

Eine oxidationskatalytische Abtrennvorrichtung der vorstehend genannten Art weist üblicherweise einen Behälter auf, welcher einen Oxidationskatalysator enthält, und der von dem Druckgas ausgehend von einer Einströmseite zu einer Ausströmseite durchströmt ist. Zur Reinigung der Druckgase müssen in der oxidationskatalytische Abtrennvorrichtung sowohl die Aerosole als auch die Dämpfe katalytisch oxidiert werden, wozu man eine bestimmte Verweildauer und eine bestimmte Geschwindigkeit der zu reinigenden Druckgase im Katalysator benötigt. Wird die notwendige Verweildauer unterschritten, so können noch im Druckgasstrom dampfförmige Öle verbleiben und die gewünschte und geforderte Reinheit kann nicht eingehalten werden. Wird die notwendige Geschwindigkeit unterschritten, können Aerosole durch das Katalysatorbett durchgehen, so dass ebenfalls nicht die gewünschte und geforderte Reinheit mittels der oxidationskatalytischen Abtrennbehandlung behandelten Druckgases erreicht wird.

Solange Verdichtungsanlagen ständig im Nennbetrieb oder gleichbleibenden Betrieb arbeiten, lassen sich die Durchströmungsverhältnisse des Druckgasstromes in dem meist zylindrisch ausgestalteten Behälter durch geeignete Maß-Maßnahmen derart abstimmen, dass der gewünschte Reinheitsgrad des Druckgases erreicht wird.

Heutzutage werden häufig Verdichtungsanlagen in unterschiedlichen Betriebsbereichen jeweils bedarfsabhängig betrieben, so dass sich die Durchflußmengen und die Geschwindigkeiten der in der oxidationskatalytischen Abtrennvorrichtung zu behandelnden Druckgase ändem können. Im Falle eines solchen variablen Betriebs einer Verdichtungsanlage bereitet die gewünschte Abtrennung von Öl und flüchtigen organischen Bestandteilen aus den Druckgasen Schwierigkeiten, da sich die Strömungs- und Betriebsverhältnisse in der oxidationskatalytische Abtrennvorrichtung nicht zuverlässig auf die sich ändernden Betriebsverhältnisse anpassen lassen.

Die Erfindung zielt daher darauf ab, eine oxidationskatalytische Abtrennvorrichtung der gattungsgemäßen Art bereitzustellen, welche auch einen zuverlässigen Einsatz bei variablen Betriebsverhältnissen einer Verdichtungsanlage gestattet.

Nach der Erfindung wird hierzu eine oxidationskatalytische Abtrennvorrichtung für Öl und flüchtige organische Bestandteile aus Druckgasen einer Verdichtungsanlage bereitgestellt, welche einen Behälter aufweist, welcher einen Oxidationskatalysator enthält, und der vom Druckgas ausgehend von der Einströmseite zur Ausströmseite durchströmt ist, wobei sich die oxidationskatalytische Abtrennvorrichtung dadurch auszeichnet, dass der Behälter wenigstens zwei Kammern mit unterschiedlichen Durchmessern umfaßt.

Da bei der erfindungsgemäßen oxidationskatalytische Abtrennvorrichtung wenigstens zwei Kammern mit unterschiedlichen Durchmessern vorhanden sind, in welchen der Oxidationskatalysator angeordnet ist, lassen sich die Betriebs-und Strömungsverhältnisse in der oxidationskatalytische Abtrennvorrichtung auch auf sich ändemde Durchströmungsverhältnisse zuverlässig derart anpassen, dass man auch bei einer variablen Liefermenge der Verdichtungsanlage immer zuverlässig den gewünschten Reinheitsgrad des erzeugten Druckgases am Ausgang der oxidationskatalytische Abtrennvorrichtung erhält.

Insbesondere umfaßt bei der oxidationskatalytische Abtrennvorrichtung nach der Erfindung der Behälter einströmseitig eine erste, durchmesserkleinere Kammer, welche auf den kleinsten Druckgasdurchfluß und die langsamste Geschwindigkeit abgestimmt ist, und hieran schließt sich eine zweite, durchmessergrößere Kammer bis zur Ausströmseite an, welche eine Geschwindigkeitverlangsamung gestattet.

Vorzugsweise ist die Auslegung derart getroffen, dass die erste Kammer hauptsächlich für die Aerosolabscheidung aus dem Druckgasstrom und die wenigstens zweite Kammer hauptsächlich für die Restdampfkatalyse bestimmt ist.

Bei dieser Auslegung ist die erste Kammer des Behälters im Eintrittsbereich auf den kleinsten Durchfluß und damit die langsamste Geschwindigkeit eingestellt, so dass dort eine effektive Aerosolabscheidung erreicht wird. In der zweiten, durchmessergrößeren Kammer kann dann die Durchströmungsgeschwindigkeit weiter verlangsamt werden, um die notwendige Verweildauer für die Restdampfkatalyse in der oxidationskatalytische Abtrennvorrichtung bereitzustellen. Durch dieses Kammerprinzip nach der Erfindung kann auch eine zuverlässige Druckgasreinigung bei variablen Betriebsverhältnissen der Verdichtungsanlage sichergestellt werden, so dass man auch bei variablen Betriebsverhältnissen den geforderten Reinheitsgrad des Druckgases nach DIN-ISO 8573-1 Klasse 1 erreichen kann.

Vorzugsweise ist die Kammeranordnung bei der erfindungsgemäßen oxidationskatalytischen Abtrennvorrichtung als Patronensystem auswechselbar ausgelegt, so dass im Bedarfsfall eine einfache Auswechslung zur Veränderung des Kammersystems möglich ist.

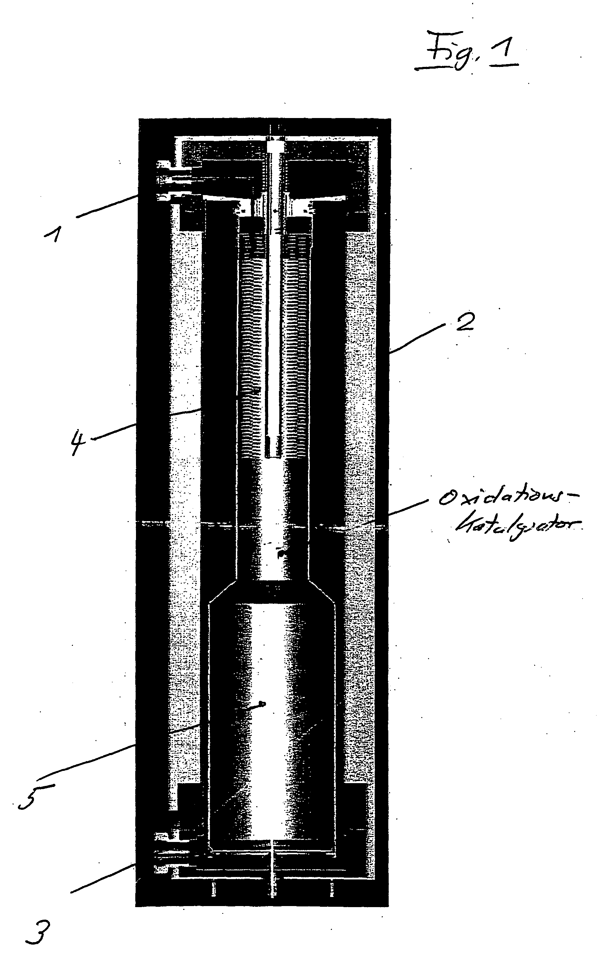

Weitere Einzelheiten, Merkmale und Vorteile der Erfindung ergeben sich aus der nachstehenden Beschreibung von bevorzugten Ausführungsformen unter Bezugnahme auf die beigefügte Zeichnung.

Die einzige Figur der Zeichnung zeigt schematisch im Schnitt eine oxidationskatalytische Abtrennvorrichtung nach der Erfindung.

Die oxidationskatalytische Abtrennvorrichtung in der Zeichnung hat eine mit 1 bezeichnete Einströmseite, an welcher der von einer Verdichtungsanlage geförderte Druckgasstrom in einen Behälter 2 einströmt, welcher einen nicht gezeigten Oxidationskatalysator enthält. Ausströmseitig hat die oxidationskatalytische Abtrennvorrichtung einen mit 3 bezeichneten Auslaß, an welchem ein Druckgasstrom austritt, der die oxidationskatalytische Abtrennvorrichtung durchströmt hat, und von dem Öl und flüchtige organische Bestandteile auf physikalisch-chemische Weise unter Einsatz eines Oxidationskatalysator abgetrennt worden sind.

Die oxidationskatalytische Abtrennvorrichtung umfaßt ausgehend von der Einströmseite 1 im Behälter 2 wenigstens zwei Kammer 4, 5 mit unterschiedlichen Durchmessern. Wie gezeigt, schließt sich einstömseitig im Behälter 2 eine erste und mit 4 bezeichnete, durchmesserkleinere Kammer an, welche auf den kleinsten Druckgasdurchfluß und die langsamste Geschwindigkeit abgestimmt ist. Daran schließt sich dann eine zweite und mit 5 bezeichnete, durchmessergrößere Kammer an, in deren Bereich auch der Auslaß 3 vorgesehen ist, und welche eine Geschwindigkeitsverlangsamung des durchströmenden Druckgases gestattet. Wie gezeigt, können die beiden Kammern 4 und 5 als eine Art Einsatz in Form eines Patronensystems auswechselbar ausgelegt sein, so dass man die Längen- und Durchmesserverhältnisse der Kammern 4, 5 variieren kann und gegebenenfalls durch einen Kammereinsatz mit anderer Gestalt auswechseln kann.

Die erste, durchmesserkleinere Kammer 4 ist hauptsächlich für eine zuverlässige und effektive Aerosolabscheidung aus dem Druckgasstrom bestimmt, während die zweite, durchmessergrößere Kammer 5 durch die Verlangsamung des durchgehenden Druckgasstromes eine ausreichende Verweildauer für die Restdampfkatalyse bereitstellt.

Dank der wenigstens zwei Kammer 4, 5 des Behälters 2 für die oxidationskatalytische Abtrennung kann somit eine solche oxidationskatalytische Abtrennvorrichtung auch bei Verdichtungsanlagen eingesetzt werden, welche variable Druckgasmengen mit variablen Geschwindigkeiten liefert. Gerade durch diese definitive Trennung des Innenraums des Behälters 2 mit Hilfe der Kammern 4 und 5 können die jeweiligen Kammern für unterschiedliche Mengen und mit unterschiedlichen Durchmessern ausgelegt werden, um eine wirksame funktionelle Trennung von Aerosolabscheidung und Restdampfkatalyse unter den jeweils optimalen Verhältnissen vorzunehmen.

Zusammenfassend wird nach der Erfindung eine oxidationskatalytische Abtrennvorrichtung für Öl und flüchtige organische Bestandteile aus Druckgasen einer Verdichtungsanlage angegeben, welche ausgehend von der Einströmseite eines Behälters, welcher einen Oxidationskatalysator enthält, wenigstens zwei Kammern mit unterschiedlichen Durchmessern und/oder Längen umfaßt. Hierdurch kann man die Kammern jeweils auf die gewünschten Hauptfunktionen auch hinsichtlich den geometrischen Verhältnisse abstimmen, wobei insbesondere eine erste, durchmesserkleinere Kammer 4 für die Aerosolabscheidung, und eine zweite durchmessergrößere Kammer 5 für die Restdampfkatalyse bestimmt ist. Selbst bei variabel betriebenen Verdichtungsanlagen können somit die Druckgase mit Hilfe dieser oxidationskatalytischen Abtrennvorrichtung zuverlässig derart gereinigt werden, dass man den geforderten und gewünschten Reinheitsgrad von qualitativ hochwertem Druckgas erhält.

## Patentansprüche

1. Oxidationskatalytische Abtrennvorrichtung für Öl und flüchtige organische Bestandteile aus Druckgasen einer Verdichtungsanlage mit einem Behälter, welcher einen Oxidationskatalysator enthält, und der von einem Druckgas ausgehend von einer Einströmseite zu einer Ausströmseite durchströmt ist, **dadurch gekennzeichnet, dass** der Behälter wenigstens zwei Kammern mit unterschiedlichen Durchmessern umfaßt.

2. Oxidationskatalytische Abtrennvorrichtung nach Anspruch 1, **dadurch gekennzeichnet, dass** der Behälter wenigstens einströmseitig eine erste, durchmesserkleinere Kammer hat, welche auf den kleinsten Druckgasdurchfluß und die langsamste Geschwindigkeit abgestimmt ist, und sich hieran wenigstens eine zweite, durchmessergrößere Kammer bis zur Ausströmseite anschließt, welche eine Geschwindigkeitsverlangsamung gestattet.

3. Oxidationskatalytische Abtrennvorrichtung nach Anspruch 1 oder 2, **dadurch gekennzeichnet, dass** die erste Kammer hauptsächlich für die Aerosolabscheidung aus dem Druckgasstrom, und die zweite Kammer hauptsächlich für die Restdampfkatalyse bestimmt ist.

4. Oxidationskatalytische Abtrennvorrichtung nach einem der vorangehenden Ansprüche, **dadurch gekennzeichnet, dass** die Kammeranordnung als Patronensystem auswechselbar ausgelegt ist.
